# EUROPEAN PATENT SPECIFICATION

(11) **EP 0 532 677 B1**
(45) Date of publication and mention of the grant of the patent: **14.12.1994**
(21) Application number: 91912347.1
(22) Date of filing: 03.07.1991
(51) Int. Cl.: C01B 7/14

(54) **PROCESS FOR THE PRODUCTION OF ELEMENTARY IODINE**
VERFAHREN ZUR HERSTELLUNG VON ELEMENTÄREM IOD
PROCEDE DE PRODUCTION D'IODE ELEMENTAIRE

(30) Priority: 08.04.1991 JP 101756/91
(43) Date of publication of application: 24.03.1993
(73) Proprietor: MERCK PATENT GmbH, D-64271 Darmstadt (DE)
(72) Inventor: CASES, Jaime, Santiago de Chile (CL); ENGELBREIT, Claus, Santiago de Chile (CL); IBACACHE, Eugenio, Santiago de Chile (CL)
(86) International application number: EP9101239
(87) International publication number: WO9217398

(56) References cited:
- EP-A- 0 106 934
- US-A- 1 994 416
- ELVERS B. ET AL. 'ULLMANNS ENCYCLOPEDIA OF INDUSTRIAL CHEMISTRY' 1989 , VCH VERLAG , WEINHEIM, DE VOL. A14, 5TH EDITION see page 383, last paragraph - page 384, paragraph 1

## Description

### Background of the Invention:

The invention relates to the production of elementary iodine from materials containing iodine in various oxidation states. One important group of these raw materials contains iodine in the form of iodide salts, like alkali iodides (e.g. NaI or KI) or alkaline earth iodides (MgI₂ or CaI₂). Another important group contains iodine in the form of iodate salts, like alkali iodates (e.g. NaIO₃ or KIO₃) or alkaline earth iodates (e.g. Mg(IO₃)₂ or Ca(IO₃)₂). In recent years a third group of raw materials, containing simultaneously iodides and iodates, has gained interest. Another group of raw materials consists of waste or sewage of iodine processing industries, e.g. in the production of X-ray contrast media; the last group of raw materials is gaining special interest in view of environmental regulations. Processes for the production of elementary iodine out of clear, non-particulate solutions or extracts of these raw materials are well known for persons skilled in the art. These processes are described along with further references in handbooks of chemistry like Bailar, J.C. et al. (editors): Comprehensive Inorganic Chemistry (Volume 2, Pergamon Press, Oxford, New York, Toronto, Sydney, Braunschweig), Elvers, B. et al. (editors): Ullmann's Encyclopedia of Industrial Chemistry (Volume A14, 5. edition, 1989, Verlag Chemie, Weinheim), and Kirk-Othmer: Encyclopedia of Chemical Technology (Volume 13, 3. edition, 1981, John Wiley & Sons, New York, Chichester, Brisbane, Toronto).

The acids suitable for acidification steps in the processes for the production of iodine are described in the the literature cited. The concentration used is known to the person skilled in the art.

If these processes are to start with solid raw materials, these materials are first extracted and treated further to yield such a non-particulate solution.

The term "non-particulate solution" in the context of this invention is understood as a solution which does not contain more than 1 % (weight/weight) solids as opposed to a "slurry" or "pulp" which contain much higher amounts of solids.

One of these processes is the recovery of iodides out of brines. First the aqueous raw material is clarified by filtration or other equivalent means known to the person skilled in the art. The clear solution is first acidified and then treated with chlorine or some other oxidizing agent like ozone or hydrogen peroxide. Such oxidizing agents are well known to a person skilled in the art. The elementary iodine is then separated from the reaction mixture, the method depending of the concentration of the iodine.

If the concentration of iodine is higher than 0.3 g/l iodine can be retrieved by flotation or filtration from the reaction mixture. The mother liquor still contains a considerable amount of iodine.

If the concentration of iodine is low (less than 0.3 g/l iodine) the iodine is extracted from the solution using organic solvents like kerosene. This process is also used to isolate iodine from the above mentioned mother liquors. Using organic solvents yields environmental and occupational hazards, like fire hazard or contamination of ground water with organic solvents.

If a surplus of iodide is present, the complex I₃⁻-ion is formed and the iodine is extracted using an anion exchanger resin. The iodine then can be eluted from the resin by aqueous alkaline solutions. Iodine is then isolated by acidification of the washings.

A different group of processes is used in case that the iodine is in the state of iodate salts. For these processes a reducing agent is reacted with the iodate ions containing solution previously acidified. Examples of suitable reducing agents are: Sulphur dioxide (SO₂), sulphites, like sodium sulphite or potassium bisulphite, or thiosulphates like sodium thiosulphate. Iodine is contained as iodate salts in various sources like minerals or tailing dumps of saltpeter manufacturing. These raw materials contain the iodate mostly as calcium iodate which is poorly soluble in water (2 g/l at 15^{o}C). Thus vast volumes of water have to be used and the reaction products are formed in dilute solution. Extracting the raw materials is a very time consuming step involving large volumes of water, and is either done by fixed bead leaching or in mobile bed using agitators or hydrocyclones, which need a lot of energy. So the overall process is very cumbersome. As the extracts have to be further separated from the solids by settling, filtration or centrifugation, the process becomes even more cumbersome.

All these processes make it necessary that the starting solution is clear and virtually free of solids. Many of the disadvantages mentioned above could be avoided, if an aqueous suspension of the raw material could be used.

### Summary of the Invention:

The invention thus relates to an improved process for the production of elementary iodine from salts containing iodine in its various oxidation states using water as a solvent characterized in that the process is carried out with the raw materials in suspension. The raw material thus is handled as a slurry or a pulp containing between 5 and 80 % (weight/weight) of solids; the upper limit dictated by the ability of the pulp to flow and by the possibility to move the material through the apparatus. Especially preferred is a range between 10 and 50 % (weight/weight) solids.

Acids suitable for acidification of the reaction slurry are known to the person skilled in the art; sulfuric acid (concentration preferably between 4 and 90 % (weight/ weight)) is preferred as acidifying agent.

The solid raw material containing iodine in the form of iodates, e.g. caliches, residuals from saltpeter manufacturing or from other iodine processing industry or from other minerals containing iodates, is mixed with water to yield a slurry or pulp, consisting of 5 to 70 % (weight/weight) solids, which can be pumped, after been properly acidified, through the apparatus. In a first reactor the suspension is reacted with sulphur dioxide or an equivalent reducing agent as defined above so that all iodate is transferred to iodide. The material then is pumped to a second reactor where it is reacted with chlorine or an equivalent oxidizing agent as defined above. After all iodide is converted to elementary iodine the suspension is pumped into a stripping column where air is blown through the suspension and thus the iodine is driven into the air stream. The iodine is recovered from the air stream in an absorption tower, a process well known for a person skilled in the art. Finally the iodine might be refined by methods known to the person skilled in the art.

In another embodiment of the invention raw materials containing the iodine as iodate salts are again suspended in water, acidified, and reacted with sulphur dioxide or a reducing agent as described above. The resulting iodide then is reacted with iodate stemming from a stream of the acidified, but otherwise untreated suspension of the raw material; thus elementary iodine is formed without the expense of chlorine or some other additional oxidizing agent. The suspension of the raw material is measured into the suspension containing the iodide, so that all iodide is reacted to yield elementary iodine. This reaction and its stoichiometry are used in iodometric titrations and known to the person skilled in the art.

In both types of processes explained above iodate salts of the raw material can be accompanied by iodide salts without making changes in the general procedures necessary.

In an especially preferred embodiment of the invention the suspension stripped of the iodine is clarified and the water returned to the process, thus economizing the use of water.

If the solid raw material contains the iodine in the form of iodide salts the above described process can be simplified by omitting the reduction step. If the iodide salts are present in sewage from iodine processing industry or are dissolved as a brine in a naturally occurring suspension these suspensions can be used without prior clarification.

All variations of the basic invention outlined above allow the process to be conducted in a closed system, thus avoiding the contamination of the environment with iodine. Contamination of the environment is further avoided as the process according to the invention does not involve extraction steps using organic solvents. And finally, the process according to the invention needs much less water than conventional ones because the raw materials are handled as a heavy pulp or slurry and as most of the water can easily be re-used after simple sedimentation or filtration of the residuals after blowing out the iodine.

The following examples and drawings are intended for illustration of the invention and must not be construed as limiting the scope of the invention. A person skilled in the art can use the invention as disclosed in this application to its fullest degree.

### Description of the Drawings:

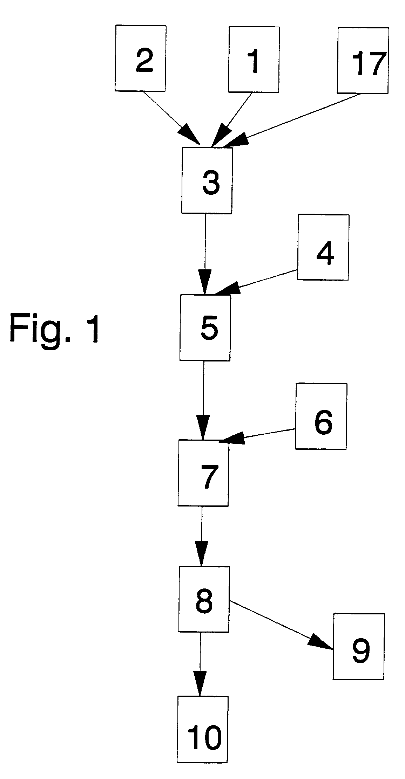

Figure 1 shows the flow diagram of a process in which iodate containing solid raw materials (1) are mixed with water from the process water reservoir (2) and acid from reservoir (17) in a mixing tank (3). The resulting slurry is pumped to the SO₂-reaction tank (5), in which the iodate ions of the raw material are reacted with SO₂ from the SO₂-reservoir (4) to yield iodide ions. The suspension containing the iodide is then pumped into the chlorine-reaction tank (7), in which the iodide ions are reacted with chlorine from the chlorine reservoir (6) to yield elementary iodine. The resulting suspension then is pumped into a blow out tower (8), where air is bubbled through the suspension and thus the iodine is driven out of the suspension. The iodine containing air stream is collected in an adsorption column (9) where the iodine is isolated. The remaining exhausted suspension is collected in a waste container (10) and disposed of.

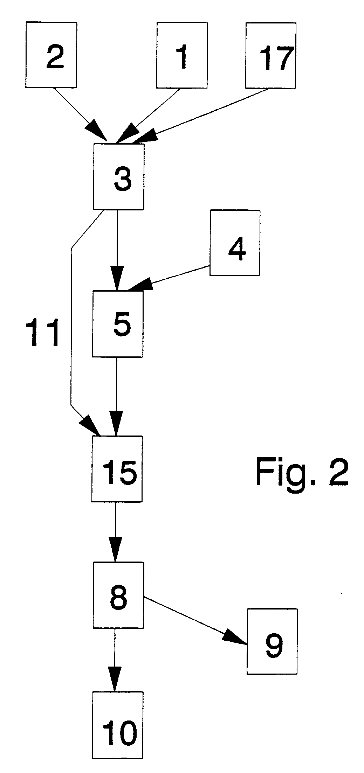

Figure 2 shows the flow diagram of a process similar to the one in Figure 1, in which again iodate containing solid raw materials (1) are mixed with water from the process water reservoir (2) and acid from a reservoir (17) in a mixing tank (3). The raw material might likewise contain iodide salts in addition to the iodate salts. The resulting slurry is pumped to the SO₂-reaction tank (5), in which the iodate ions of the raw material are reacted with SO₂ from the SO₂-reservoir (4) to yield iodide ions. The suspension containing the iodide is then pumped into the reaction tank (15), in which it is mixed with a portion of the suspension (3), which is pumped through line (11). Thus the iodide ions are reacted with the iodate ions present in the suspension (3) to yield elementary iodine. The resulting suspension then is pumped into a blow out tower (8), where air is bubbled through the suspension and thus the iodine is driven out of the suspension. The iodine containing air stream is collected in an adsorption column (9) where the iodine is isolated. The remaining exhausted suspension is collected in a waste container (10) and disposed of.

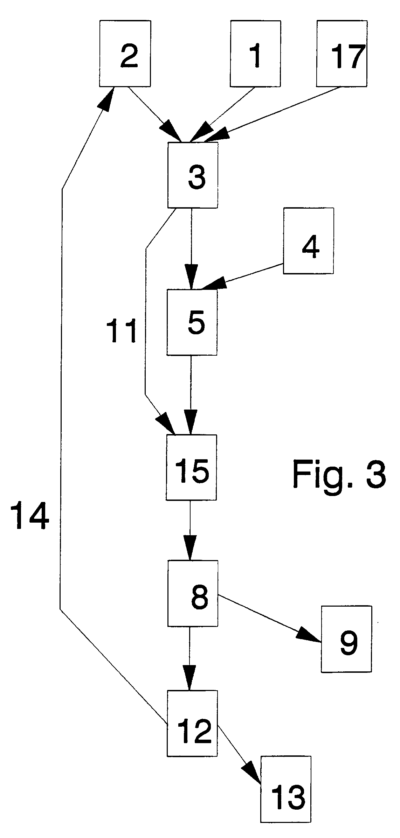

Figure 3 shows the flow diagram of a process which first steps are essentially identical to the one in Figure 2; the important improvement being that the remaining exhausted suspension is treated in a separator (e.g. a filtration unit (12)), so that most of the acid process water can be pumped back through line (14) into the process water reservoir (2); only the moist solid waste is collected in a waste container (13) and disposed of.

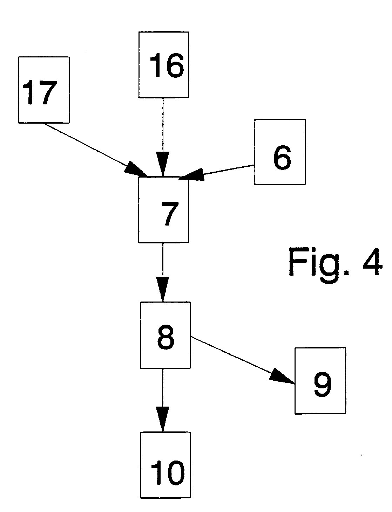

Figure 4 shows the flow diagram of a process in which iodide containing liquid raw materials (16), which can be used as an suspension without prior clarification, are pumped together with acid from reservoir (17) into the chlorine-reaction tank (7), in which the iodide ions are reacted with chlorine from the chlorine reservoir (6) to yield elementary iodine. The resulting suspension then is pumped into a blow out tower (8), where air is bubbled through the suspension and thus the iodine is driven out of the suspension. The iodine containing air stream is collected in an adsorption column (9) where the iodine is isolated. The remaining exhausted suspension is collected in a waste container (10) and disposed of.

### Description of the Preferred Embodiment / Examples:

The following examples present more details of preferred embodiments of the invention.

### Example 1:

For this example equipment as outlined in Figure 1 is used.

The ground solid raw material containing iodate salts is blended with water to yield a slurry containing 20 % (weight/weight) solids. Sulfuric acid (25 % (weight/weight)) is used for pH-adjustments. This slurry, at a pH 0.5 - 3.0, is pumped into a plug flow reactor (SO₂-reaction tank) at a rate of approximately two tons per hour. Sulphur dioxide is injected into the slurry. The reaction is carried out at ambient temperature (18 to 25^{o}C). After the reaction the slurry is pumped into a second plug flow reactor (chlorine reaction tank), where chlorine is injected into the slurry to yield elementary iodine. From there the slurry is pumped to the blow out tower, sized 9 meter high and 0.8 meter in diameter, where a steady stream of air is injected into the slurry. The air exits at the top of the tower and contains 90 % of the iodine originally present in the slurry. The exhausted slurry is disposed of whereas the air stream containing the iodine is directed into an adsorption column (dimensions 5.5 meter high, diameter 0.8 meter). There the iodine is isolated for further purification.

### Example 2:

For this example equipment as outlined in Figure 3 is used.

The ground solid raw material containing iodate and iodide salts is blended with water to yield a slurry containing 30 % (weight/weight) solids and acidified to pH 0.5 - 3.0. Sulfuric acid (25 % (weight/weight)) is used for pH-adjustments. A part of this slurry is pumped into a plug flow reactor (SO₂-reaction tank) at a rate of approximately two tons per hour. Sulphur dioxide is injected into the slurry. The reaction is carried out at ambient temperature (18 to 25^{o}C). After the reaction the slurry is pumped into another flow reactor (reaction tank), where an aliquot of the original slurry is mixed with the slurry reacted with the SO₂ to yield elementary iodine. From there the slurry is pumped to the blow out tower, sized 9 meter high and 0.8 meter in diameter, where a steady stream of air is injected into the slurry. The air exits at the top of the tower and contains 90 % of the iodine originally present in the slurry. The air stream containing the iodine is directed into an adsorption column (dimensions 5.5 meter high, diameter 0.8 meter). There the iodine is isolated for further purification. The exhausted slurry is separated from most of the water using a filtration unit with vibrating screens. The moist solids are disposed of, whereas the liquid can be fed back into the process and be used to suspend the dry raw material.

## Claims

1. A process for the production of elementary iodine from salts containing iodine in various oxidation states using a reducing agent or an oxidizing agent and using water as solvent characterized in that the process is carried out with the raw materials in suspension.

2. A process of claim 1 wherein the iodine is present in a mixture of two oxidation states, namely iodide and iodate salts.

3. A process of claim 1 wherein the iodine is present as iodate salts, and wherein first iodides are produced using a reducing agent.

4. A process of claim 3 wherein the reducing agent is sulphur dioxide or a salt of sulphurous acid, for example a sulphite, a bisulphite, a metabisulphite.

5. A process of claim 3 wherein the reducing agent is a thiosulphate.

6. A process of at least one of the claims 1 through 5 wherein the iodine compound consists of iodide salts and the iodine is produced using an oxidizing agent.

7. A process of claim 6 wherein the oxidizing agent is chosen from the group of chlorine, ozone, and/or a peroxide containing compound, like hydrogen peroxide.

8. A process of claim 6 wherein the oxidizing agent is an iodate.

9. A process of one of the claims 1 through 8 characterized in that the process water used as solvent is recycled back into the process.

## Patentansprüche

1. Verfahren zur Herstellung von elementarem Jod aus Salzen, die Jod in verschiedenen Oxidationsstufen enthalten, indem man ein Reduktionsmittel oder ein Oxidationsmittel und Wasser als Lösungsmittel verwendet, dadurch gekennzeichnet, daß man das Verfahren mit den in einer Suspension vorliegenden Rohstoffen durchführt.

2. Verfahren nach Anspruch 1, worin das Jod in einer Mischung aus zwei Oxidationsstufen, und zwar Jodid- und Jodatsalzen, vorliegt.

3. Verfahren nach Anspruch 1, worin das Jod als Jodatsalze vorliegt und worin zunächst Jodide mittels eines Reduktionsmittels hergestellt werden.

4. Verfahren nach Anspruch 3, worin es sich bei dem Reduktionsmittel um Schwefeldioxid oder um ein Salz der schwefligen Säure, zum Beispiel ein Sulfit, ein Bisulfit, ein Metabisulfit, handelt.

5. Verfahren nach Anspruch 3, worin es sich bei dem Reduktionsmittel um ein Thiosulfat handelt.

6. Verfahren nach mindestens einem der Ansprüche 1 bis 5, worin die Jodverbindung aus Jodidsalzen besteht und das Jod mittels eines Oxidationsmittels hergestellt wird.

7. Verfahren nach Anspruch 6, worin das Oxidationsmittel aus der Gruppe Chlor, Ozon und/oder einer peroxidhaltigen Verbindung wie Wasserstoffperoxid ausgewählt ist.

8. Verfahren nach Anspruch 6, worin es sich bei dem Oxidationsmittel um ein Jodat handelt.

9. Verfahren nach einem der Ansprüche 1 bis 8, dadurch gekennzeichnet, daß das als Lösungsmittel verwendete Verfahrenswasser in das Verfahren zurückgeführt wird.

## Revendications

1. Procédé pour la production d'iode élémentaire à partir de sels contenant de l'iode dans divers états d'oxydation, à l'aide d'un agent de réduction ou d'un agent d'oxydation et en utilisant de l'eau à titre de solvant, caractérisé en ce que le procédé s'effectue avec les matières premières en suspension.

2. Procédé selon la revendication 1, dans lequel l'iode est présent dans un mélange des deux états d'oxydation, à savoir les sels d'iodures et d'iodates.

3. Procédé selon la revendication 1, dans lequel l'iode est présent sous la forme de sels d'iodates et dans lequel on produit d'abord les iodures à l'aide d'un agent de réduction.

4. Procédé selon la revendication 3, dans lequel l'agent de réduction est le dioxyde de soufre ou un sel d'acide sulfureux, par exemple un sulfite, un bisulfite, un métabisulfite.

5. Procédé selon la revendication 3, dans lequel l'agent de réduction est un thiosulfate.

6. Procédé selon au moins une des revendications 1 à 5, dans lequel le dérivé d'iode se compose de sels d'iodures et l'iode est produit à l'aide d'un agent d'oxydation.

7. Procédé selon la revendication 6, dans lequel l'agent d'oxydation est choisi dans le groupe comprenant le chlore, l'ozone et/ou un composé contenant un peroxyde, comme le peroxyde d'hydrogène.

8. Procédé selon la revendication 6, dans lequel l'agent d'oxydation est un iodate.

9. Procédé selon l'une quelconque des revendications 1 à 8, caractérisé en ce que l'eau du procédé utilisée comme solvant est recyclée en retour dans le procédé.
